# EUROPEAN PATENT SPECIFICATION

(11) **EP 1 850 434 B1**
(45) Date of publication and mention of the grant of the patent: **09.11.2016**
(21) Application number: 07006226.0
(22) Date of filing: 27.03.2007
(51) Int. Cl.: H02G 3/04

(54) **Electric cable retaining device for wiring ducts**
Stromkabelbefestigungsvorrichtung für Verdrahtungskanäle
Dispositif de rétention de câble électrique pour conduits de câblage

(30) Priority: 24.04.2006 IT MI20060819
(43) Date of publication of application: 31.10.2007
(73) Proprietor: Bocchiotti S.p.A. Societa' per l'Industria Elettrotecnica, I-20124 Milano (IT)
(72) Inventor: Nardi, Ivo, Bocchiotti S.p.A., 16147 Genova (IT)
(74) Representative: Crippa, Paolo Ernesto

(56) References cited:
- EP-A- 1 401 073
- EP-A- 1 744 424
- DE-U1- 20 209 520
- NL-A- 7 803 890

## Description

The present invention relates to the wiring of electric cables, particularly, the invention relates to a device for retaining electric cables within wiring ducts to be used, for example, in electrical switchboards.

Wiring ducts are known to consist of two side walls that are joined to a bottom wall such as to have a U-shaped cross section. Particularly, these side walls are formed by flexible fingers that are evenly spaced away from each other and have an end shaped such as to allow a cover to be mounted/dismounted thereto. (see DE-U-20209520)

As it is known, to prevent the electric cables from falling out of the duct when the latter is vertically or horizontally mounted within an electrical switchboard, cable retaining strips are provided which are cantilevered fixed throughout the duct. Particularly, these strips have a first end provided with elements for coupling to the fingers of a side wall of the duct in order to removably fix the retaining strip to the duct. A second free end of the strip stretches to the other side wall of the duct, but remains separated therefrom by a gap.

With the known cantilevered strips, several cables having a small diameter may unsuitably fall out of the duct through the above-mentioned gap.

In this regard, it should be observed that said strips cannot be elongated beyond a certain extent to avoid that the latter become difficult to mount to the duct and to avoid also complicating the subsequent mounting of the cover to the duct. In fact, to mount this cover, the fingers of the duct are bent towards the inside of the duct and this operation would result difficult at the fingers to which the long strips are fixed.

Furthermore, the elements for coupling to the duct fingers often have a poor hold, especially when the cantilevered strips must hold large cable bundles within the duct. In addition, the connection between the strip and the flexible fingers is not very reliable also due to the poor stability of each finger.

The object of the present invention is to propose a device for retaining cables within a wiring duct, which allows overcoming the drawbacks of the above-cited traditional cantilevered strips, with particular reference to an improvement in the retention of the cables within the duct.

This object is achieved by a cable retaining device such as described in the annexed claim 1.

Alternative embodiments of the present invention are as described with reference to claims 2 to 20.

The object of the present invention is also a wiring system for cables such as described in claim 21.

The characteristics and advantages of the present invention will appear from the following detailed description of an exemplary and non-limiting embodiment thereof, in relation with the annexed drawings, in which:
- Fig. 1 shows an exploded perspective view of a first type of wiring duct for cables and cable retaining device in accordance with an embodiment of the present invention;
- Fig. 2A and 2B show perspective cut-away views of the cable retaining device in Fig. 1;
- Fig. 3A and 3B show perspective views of a cable retaining device in accordance with a further embodiment of the invention;
- Fig. 4 shows a top view of the cable retaining device in Fig. 1 being fixed to the wiring duct;
- Fig. 5 shows a side view in the direction of arrow E of the wiring duct for cables and retaining device in Fig. 4;
- Fig. 6 shows a perspective view of the cable retaining device in Fig. 3A-B, partially fixed to a second type of wiring duct;
- Fig. 7 shows a side view in an operating condition of the duct in Fig. 6 re-closed by means of a cover.

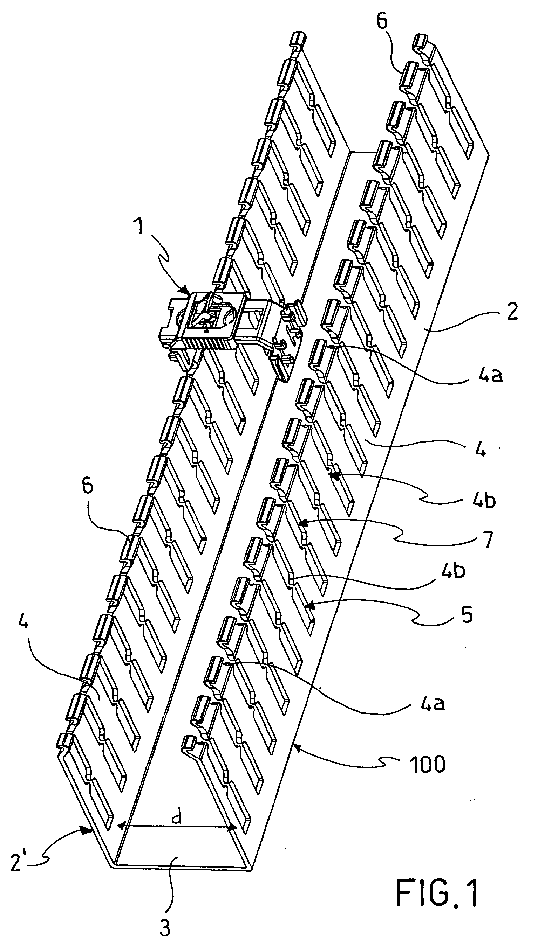

With reference to Fig. 1, 2A, 2B, 4, and 5, a device 1 for retaining cables within wiring ducts will be now described in accordance with an embodiment of the invention. Particularly, this retaining device 1 is an equipment suitable to be fixed to a wiring duct 100 shown in Fig. 1 to ensure the retention of the cables within this duct 100.

It should be observed that the wiring duct 100 is of a known type, and for example, can be used to house electric cables or other ducts to be wired within electrical switchboards.

Particularly, this duct 100 comprises first 2 and second 2' side walls joined to a bottom wall 3 such as to have a U-shaped cross-section. Particularly, said first 2 and second 2' side walls are formed by flexible fingers 4 alternating with slots 5 and each having an end 6 shaped such as to allow mounting/dismounting a cover (not shown in Fig. 1).

It should be observed that each flexible finger 4 comprises projections 4a and 4b protruding from sides 7 of the finger 4 thus interrupting the substantially rectilinear profile thereof. Particularly, the fingers 4 of the duct 100 in Fig. 1 comprise each two upper projections 4a placed proximate to the end 6 and two lower projections 4b placed about halfway the entire height of the fingers 4. This upper 4a and lower 4b projections are suitable to be mechanically engaged with the cable retaining device 1 fixed to the fingers 4 of duct 100 as will be better explained below.

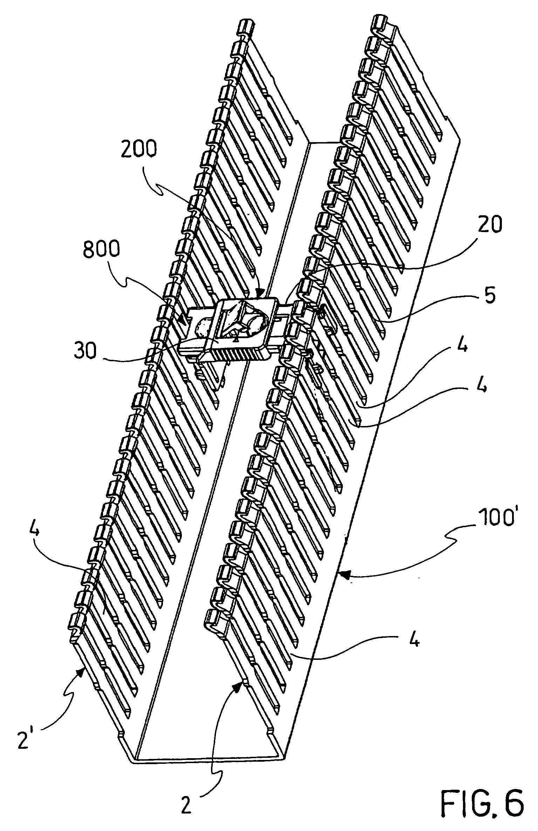

It should be observed that, as known to those skilled in the art, the duct 100 in Fig. 1 is, for example, a first type of duct provided with 12 mm wide-flexible fingers 4 alternating with 8 mm wide-slots 5. On the other hand, a second known type of duct 100' (shown in Fig. 6) is similar to the preceding one, but provides, for example 6 mm wide-fingers 4 alternating with 4 mm-slots 5.

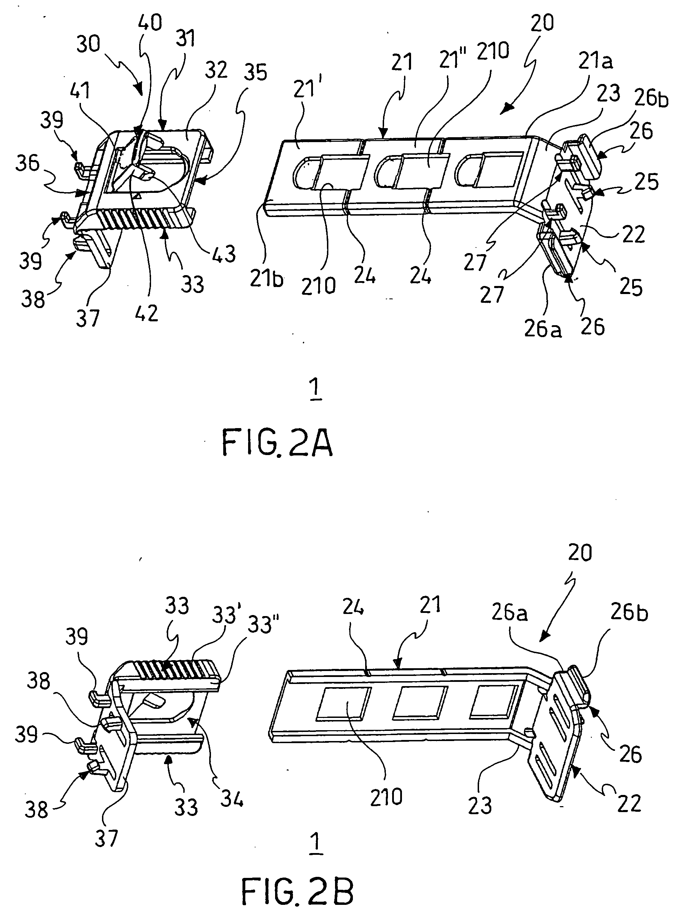

An example of the cable retaining device 1 in accordance with the invention is shown in Fig. 2A and 2B. Particularly, in this figures, the device 1 is shown in a perspective cut-away view and is similar to the retaining device 1 in Fig. 1.

This cable retaining device 1 comprises a main retaining element 20 for retaining the cables within duct 100 and secondary retaining means 30 that can be mechanically coupled with said main element 20.

Preferably, said main retaining element 20 and the secondary retaining means 30 are fabricated of plastic material, for example, polyamide.

Particularly, the main retaining element 20 includes a strip 21 having a first end 21a joined to a coupling wall 22 by means of a connecting wall 23, i.e. the strip 21 is made as one piece with the coupling wall 22.

It should be observed that the coupling wall 22 is substantially orthogonal to the strip 21, whereby the main retaining element 20 adopts a substantially L-shaped configuration.

Furthermore, this coupling wall 22 allows reversibly fixing the main retaining element 20 to the fingers 4 of one of the side walls 2 and 2' of the wiring duct 100, for example to the first side wall 2. Following this fixing, a second end 21b of the strip 21 is intended to project to the second wall 2' of duct 100.

The strip 21 comprises a plurality of sectioning points 24 for facilitating the breakage and the manual and irreversible detachment of at least one portion 21' of strip from the main retaining element 20. Thereby, in order to fix the retaining device 1 to the known wiring ducts 100, the length of the strip 21 can be reduced to be adapted to ducts 100 having a different width d, being d the distance between the side walls 2 and 2' of these ducts 100.

With particular reference to Fig. 2A and 2B, the strip 21 comprises two sectioning points 24 such as to form first 21' and second 21" strip portions that can be detached from the retaining element 20. It should be observed that these first 21' and second 21'' portions can be sequentially and irreversibly detached. In other words, said strip 21 can adopt three different lengths in order to be adapted to three types of ducts 100 having different widths d.

For example, the retaining element 20, such as shown in Fig. 2A and 2B can be fixed to ducts 100 of width d=80mm. When the first strip portion 21' has been detached, the retaining element 20 can be fixed to ducts 100 of width d=60mm. Finally, when the second strip portion 21'' has been also detached, the element 20 can be fixed to ducts 100 having width d=40mm.

In accordance with what has been stated above, with reference to Fig. 1, assuming that the wiring duct 100 has a width of d=60mm, to fix the retaining element 20 to the duct 100, the length of the strip 21 has been duly reduced by detaching the first strip portion 21'.

It should be further observed that the strip 21 comprises through-openings 210 suitable to be engaged by stop means 43 provided within the secondary retaining means 30 in order to couple the latter to the main retaining element 20. Particularly, the strip 21 comprises, for example, three aligned and substantially rectangular through openings 210.

In addition, the coupling wall 22 of the retaining element 20 includes means 25, 26 and 27 for fixing to and engage with the fingers 4 of duct 100.

Particularly, these fixing means are embodied by first elastic hooks 25 orthogonally projecting from the coupling portion 22 in the opposite direction to the strip 21. For example, these first hooks 25 are shaped such as to comprise a projection, a tooth and an undercut to be snap-coupled to the sides 7 of any flexible finger 4 of duct 100.

Particularly, the main retaining element 20 in Fig. 2A and 2B comprises two first hooks 25 being substantially parallel to each other, each of which couples to a side 7 of the same finger 4 of duct 100.

Furthermore, the coupling wall 22 comprises engaging wings 26 each formed by a wall 26a projecting from the coupling wall 22 in a substantially orthogonal direction and joined to abutment walls 26b projecting towards the outside of the main element 20.

With reference to Fig. 2A and 2B, the coupling wall 22 comprises two wings 26 suitable to be engaged with an outer surface of as many fingers 4 of duct 100 that are adjacent to the finger 4 to which said first hooks 25 are fixed. Particularly, the abutment walls 26b of the wings 26 are such as to be abutted against said adjacent fingers 4 to counter-act pulling actions applied to the strip 21 and to prevent the first hooks 25 from detaching.

In addition, the main retaining element 20 comprises surfaces 27 orthogonally projecting from the coupling wall 22 such as to result proximate to the connecting wall 23. Particularly, these surfaces are embodied in second hooks 27 each of which provides an abutment and counter-abutment coupling to an upper 4a or lower 4b projection of the finger 4. It should be observed, particularly, that each second hook 27 is substantially aligned with one of said first hooks 25 such that these first 25 and second 27 hooks define a central portion of the coupling wall 22 that can be occupied by a finger 4.

With reference to Fig. 2A and 2B, it should be observed that the secondary retaining means 30 of the cable retaining device 1 are embodied by an element provided with a main body 31 that can be mechanically coupled to the second end 21b of the strip 21. Particularly, the element 30 is removably coupled to the second end 21b of the strip.

Particularly, this main body 31 comprises a base wall 32 connected to L-shaped curved walls 33 having a main portion 33' substantially orthogonal to said base wall 32 and secondary portions 33" being parallel thereto.

This base wall 32 and the curved walls 33 define a through-seat 34 in the main body 31 to accommodate the strip 21 such that the main retaining element 20 and the element 30 can mutually slide.

Preferably, this element 30 slides on said strip 21.

Particularly, the strip 21 can be inserted within said seat 34 through an insertion opening 35 of the main body 31, and by sliding within the seat 34, it can fall out through an opposite outlet opening 36.

Furthermore, proximate to the outlet opening 36, the main body 31 is connected as one piece to a further wall 37 for coupling to the fingers 4 of duct 100. Particularly, this further wall 37 is substantially orthogonal to the main body 31 and comprises further means 38 and 39 for fixing to the fingers 4.

Particularly, with reference to Fig. 2A and 2B, these further fixing means are embodied by further first elastic hooks 38 projecting from the further coupling wall 37 thus resulting in the opposite direction to the main body 31. These further first hooks 38 are similar to the first hooks 25 of the main retaining element 20.

In addition, further second hooks 39 orthogonally projecting from the further coupling wall 37 result to be aligned with said further first hooks 38. It should be observed that these further second hooks 39 are similar to said second hooks 27 of the main retaining element 20 and carry out the same function.

Furthermore, the base wall 32 of the main body 31 comprises a tongue 40 provided with an end 41 that is fastened to the base wall 32 and a free end 42. Particularly, to adopt an opened position, the tongue 40 can be rotated like a door about the fastened end 41 in the opposite direction to the through seat 34.

Furthermore, proximate to the free end 42, the tongue 40 comprises the above-mentioned stop means 43. Particularly, these stop means are teeth 43 projecting from the tongue 40 to the through seat 34. It should be observed that these teeth 43 can be inserted within at least one of the through openings 210 of the strip 21 after the tongue 40 has been rotated to a closed position, i.e. towards the through-seat 34.

In addition, with the stop teeth 43 being inserted within one of said through openings 210, only a partial sliding by the sliding element 30 is allowed on the strip 21.

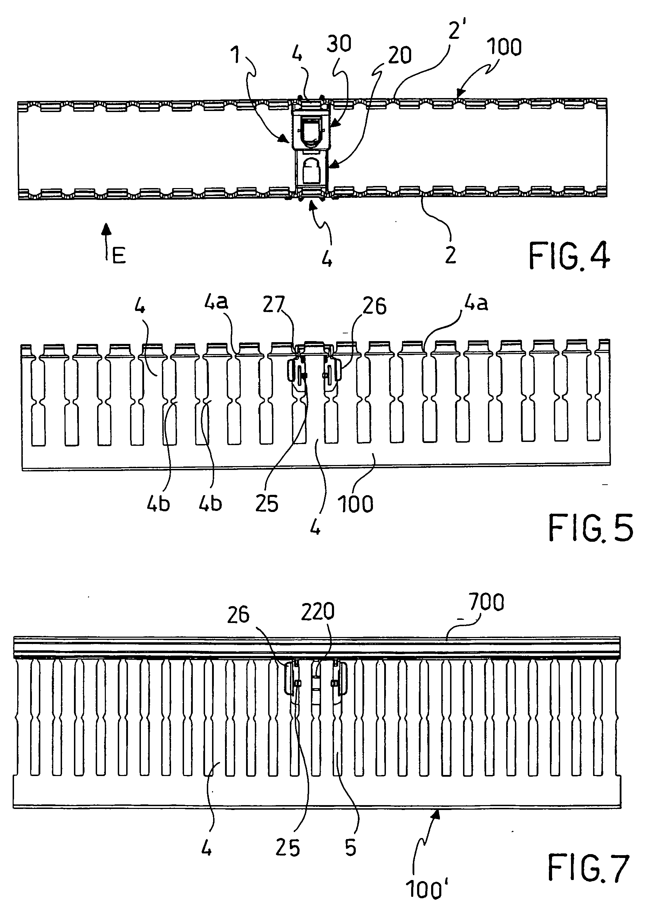

Fig. 4 and 5 show the cable retaining device 1 in Fig. 1 as being fixed to the respective duct 100 in the operating position.

Advantageously, these retaining device 1 is fixed to a finger 4 of the first side wall 2 of duct 100 and to a finger 4 of the second side wall 2' counter-posed to the first one.

Thereby, the retaining device 1 provides a loop for containing the cables together with the side walls 2 and 2' and with the bottom wall of duct 100.

Particularly, as shown in Fig. 5, the main retaining element 20 is fixed to a finger 4 of the first wall 2 by means of the first hooks 25 and rests on the adjacent fingers with the engaging wings 26. Similarly, the sliding element 30 is fixed to the opposite finger 4 of the second wall 2' of duct 100 by means of the respective further first hooks 38.

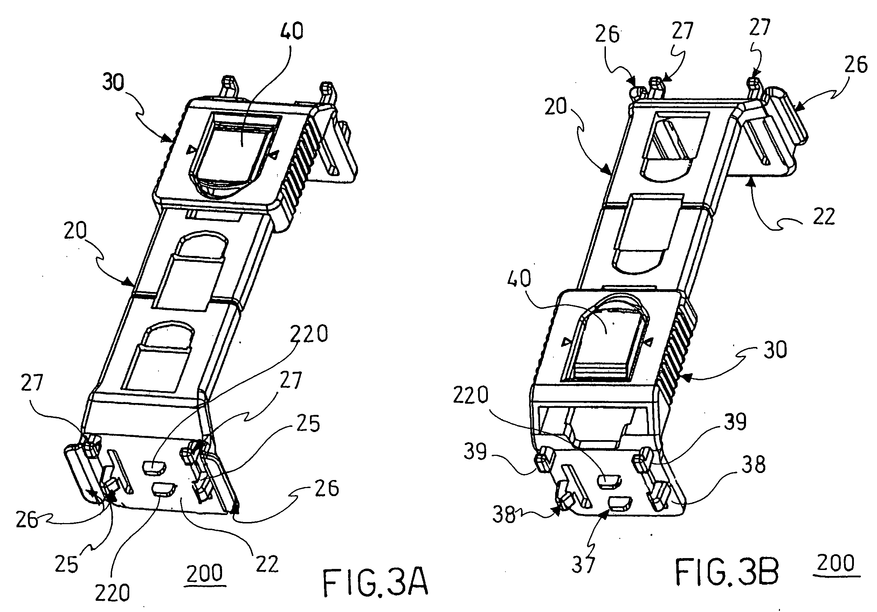

Fig. 3A and 3B show a perspective view of the second type of cable retaining device 200 for wiring ducts 100' in accordance with a further embodiment of the invention.

In these Fig. 3A and 3B, elements and components similar or equal to those presented with reference to Fig. 1, 2A and 2B are designated by means of the same numerals.

It should be observed that the retaining device 200 shown herein has coupled parts, i.e. with the strip 21 of the main retaining element 20 inserted within the main body 31 of the sliding element 30. Furthermore, the tongue 40 of the main body 31 is in the closed position in order to engage one of the through openings 210 of the strip 21 with the teeth 43 thereof.

It should be particularly observed that, besides the first 25 and second 27 hooks and engaging wings 26, the main retaining element 20 includes ribs 220 orthogonally projecting from the coupling wall 22. In greater detail, these ribs 220 project in a substantially middle portion of the coupling wall 22 thus dividing into two parts the central portion of this wall 22 defined by said first 25 and second 27 hooks.

Furthermore, the further coupling wall 37 of the sliding element 30 comprises projecting ribs 220 suitable to those of the coupling wall 22 in addition to the further first 38 and further second 39 hooks.

It should be observed that the ribs 220 can be inserted within a slot 5 comprised within two adjacent fingers 4 of duct 100' to allow the fixing of the retaining device 200 to both of these fingers 4 by means of the first/further first 25/38 hook/s.

Fig. 6 shows the retaining device 200 as being partially fixed to a respective wiring duct 100' of the second type. Furthermore, Fig. 7 shows a side view of duct 100' and device 200 in Fig. 6 in which the wiring duct 100' is closed on top by a cover 700.

With reference to said Fig. 6 and 7, the main retaining element 20 is fixed to two adjacent fingers 4 of the first side wall 2 of duct 100'. Particularly, the ribs 220 are inserted within the slot 5 between these fingers 4 and the first hooks 25 enclose the outer sides 7 of said two adjacent fingers 4. As it is known to those skilled in the art, the ribs 220 co-operate with said first hooks 25 thus preventing the two adjacent fingers 4 from bending towards each other, the ribs 220 thus contribute to hold said first hooks 25.

Furthermore, the main retaining element 20 is rested to further two fingers 4 adjacent to the coupling fingers by means of the engaging wings 26.

Similarly, the sliding element 30 can be fixed to two adjacent fingers 4 of the second side wall 2' of duct 100' by means of the respective further first hooks 38 and respective ribs 220.

With reference to Fig. 5 and 7, it should be observed that the distance from the bottom wall 3 of the retaining devices 1 and 200 coupled to the respective ducts 100 and 100' can advantageously be changed by sliding these devices along the coupling fingers 4. In other words, the distance of the devices 1 and 200 from the bottom wall 3 can be adjusted after the volume of the cables housed within the ducts 100 and 100' has been changed, in order to provide an optimum retention of the same.

For example, when the number of cables increases within the duct 100 to a maximum capacity of duct 100, the device 1 can slide in the orthogonal direction to the bottom wall 3 to the upper projections 4a. In this case, these projections 4a provide stop surfaces for the sliding of device 1 abutting against the second hooks 27 of the main retaining element 20 and with the further second hooks 39 of the sliding element 30.

The second hooks 27 and 39 abutting against the upper projections 4a increase the hold of the retaining device 1 when the latter is stressed by mechanical tractions applied towards the end 6 of the fingers 4.

On the other hand, with low volumes of electric cables to be wired, the device 1 can be fixed below the lower projections 4b, which, in turn, provide the end-of-stroke of the device 1 after about half the duct 100 has been filled.

Similar considerations apply to the retaining device 200 fixed to the second type of duct 100'.

With reference to Fig. 6, for example, a method for wiring cables within the duct 100' is described, which comprises the retaining device 200. It should be observed that this method can be similarly applied to ducts 100 of the first type comprising the device 1.

Particularly, it will be assumed to start from the operating position in which the retaining device 200 is coupled to both side walls 2 and 2' of duct 100.

In this case, when the tongue 40 of the sliding element 30 is lifted, the teeth 43 are disengaged from the respective through opening 210 of the strip 21.

In addition, the sliding element 30 is released from the respective two fingers 4 of the second wall 2' of duct 100' to be allowed to slide on the strip 21 towards the first wall 2.

Thereby, a gap 800 is created between the strip 21 and the second wall 2' in order to allow the electric cables to be laid therein within the duct 100'. Furthermore, in this step, the retaining device 200 is cantilevered fixed to duct 100' since it is fixed only to the first side wall 2.

However, in this case, the combined action of the first 25 and second 27 hooks and engaging wings 26 ensures an improved hold of the device 200 with the fingers 4 of the duct 100' as compared with that provided with known cantilevered strips.

When the operation of wiring has been finished, the sliding element 30 is caused to slide towards the second wall 2' of duct 100' to be coupled once again to the respective two fingers 4 of this wall to restore the initial operating position.

Advantageously, the retaining device 1/200 of the invention ensures a generally improved hold of the fingers 4 of duct 100/100' as compared with known cantilevered strips.

Furthermore, the device 1/200 of the invention provides a loop for holding the cables within the duct 100/100' thus preventing the cables from unsuitably falling out of the duct.

Furthermore, with the device 1/200 being fixed to the wiring duct 100/100', a cover 700 can be easily mounted. In fact, the teeth 43 of the tongue 40 engage the through openings 210 of the strip 21 such as to allow the partial sliding of the sliding element 30 on the strip 21 even when this element 30 is coupled to the latter. Thereby, the counter-posed fingers 4 of the walls 2 and 2' to which the device 1/200 is coupled, can be bent towards the inside of the duct 100/100' to facilitate mounting the cover 700 (shown in Fig. 7).

Obviously, to the cable retaining device as described in the present invention, those skilled in the art, aiming at satisfying contingent and specific requirements, will be able to carry out further modifications and variations, which are all contemplated within the scope of protection of the invention, such as defined in the claims below.

## Claims

1. An electric cable retaining device (1; 200) for a wiring duct (100; 100') having first (2) and second (2') side walls joined to a bottom wall (3), each of said first and second walls comprising a plurality of flexible fingers (4) alternating with slots (5), comprising:
- a cable retaining strip (21) within the duct provided at a first end (21a) with coupling means (25, 26; 25, 26, 220) in order to be removably fixed to at least one first finger (4) of said first side wall (2) and having a second end (21b) intended to project towards said second wall (2'),
**characterized in that** said cable retaining device includes secondary retaining means (30) that are removably mechanically coupled to said projecting end of the strip and that can be removably fixed to at least one second finger (4) of the second wall to lock said second end in the operating position, said means (30) being also directly fixed in said operating position to said projecting end of the cable retaining strip (21b).

2. The cable retaining device (1; 200) according to claim 1, wherein said secondary retaining means (30) are separately coupled to said second end (21b) projecting from the strip (21).

3. The cable retaining device (1; 200) according to claim 1, wherein said secondary retaining means (30) and said strip (21) slide relative to each other.

4. The cable retaining device (1; 200) according to at least one of the preceding claims, wherein said secondary retaining means (30) slide on said strip (21).

5. The cable retaining device (1; 200) according to claim 4, wherein said secondary retaining means (30) comprise a main body (31) that can be inserted within the second end (21b) of the strip (21), said body being connected to further coupling means (37, 38; 37, 38, 220) to be fixed to the at least one second finger (4).

6. The cable retaining device (1; 200) according to claim 5, wherein said main body (31) comprises a base wall (32) joined to curved walls (33) in order to define a through seat (34) suitable to allow the main body (31) to slide on the strip (21).

7. The cable retaining device (1; 200) according to claim 5, wherein said main body (31) comprises stop means (40, 43) suitable to be engaged with at least one through opening (210) provided within the strip (21) in order to allow an only partial sliding by the main body on said strip.

8. The cable retaining device (1; 200) according to claims 6 and 7, wherein said stop means are embodied by a tongue (40) being removably fastened to the base wall (32) of the main body (31) with a first end (41) to rotate about said first end between an opened position and a closed position, said means further comprising teeth (43) projecting from a second end (42) of the tongue to be inserted within the at least one through opening (210) of the strip (21) in said closed position.

9. The cable retaining device (1) according to claim 5, wherein the further coupling means connected to the main body (31) comprise first flexible hooks (38) to snap-couple the main body to said second finger (4) of the second wall (2') of duct (100).

10. The cable retaining device (200) according to claim 5, wherein the further coupling means connected to the main body (31) comprise first flexible hooks (38) coupled to ribs (220) for snap-coupling the main body to said second finger (4) and to a further second finger of the second wall (2') of the duct (100') adjacent said second finger.

11. The cable retaining device (1; 200) according to claim 5, wherein the further coupling means further comprise surfaces (39) suitable to be engaged with projections (4a, 4b) of the at least one second finger (4).

12. The cable retaining device (1; 200) according to claim 11, wherein said surfaces are embodied in second hooks (39) suitable to provide an abutment and a counter-abutment with said projections (4a, 4b) for stopping the sliding on the at least one second finger (4) of the main body (31) being fixed to said finger.

13. The cable retaining device (1; 200) according to claim 5, wherein said first (38) and second (39) hooks are projected from a coupling wall (37) being connected to the main body (31), said second hooks resulting aligned parallel to the first hooks.

14. The cable retaining device (200) according to claims 10 and 13, wherein the ribs (220) project from the coupling wall (37) resulting in the intermediate position between said first hooks (38).

15. The cable retaining device (1; 200) according to claim 1 and 11, wherein said coupling means of the strip (21) comprise further second hooks (27) suitable to provide an abutment and a counter-abutment with said projections (4a, 4b) to stop the sliding of the strip (21) on the at least one first finger (4).

16. The cable retaining device (1; 200) according to claim 1, wherein said coupling means of the strip (21) comprise at least one engaging wing (26) to abut, in the operative position, against at least one finger (4) adjacent to said at least one first finger of duct (100; 100').

17. The cable retaining device (1) according to claim 1, wherein the coupling means of the strip (21) comprise further first flexible hooks (25) for snap-engaging to said first finger (4) of the first wall (2) of duct (100).

18. The cable retaining device (200) according to claim 1, wherein the coupling means of the strip (21) comprise further first flexible hooks (25) coupled to ribs (220) for snap-coupling to said first finger (4) and to a further first finger of the first wall (2) of duct (100) adjacent to said first finger.

19. The cable retaining device (1; 200) according to at least one of the preceding claims, wherein the strip (21) comprises a plurality of sectioning points (24) for allowing the detachment of at least one portion (21') of strip by adjusting the strip (21) to ducts (100; 100') of different widths (d),

20. The cable retaining device (1; 200) according to at least one of the preceding claims, wherein said device is made of polyamide.

21. A wiring system for electric cables including;
- a wiring duct (100; 100') comprising:
- a bottom wall (3);
- first (2) and second (2') side walls joined to the bottom wall, each side wall comprising a plurality of flexible fingers (4) alternating with slots (5);
- profiles for holding a cover of the wiring duct (100; 100') arranged at free ends of the flexible fingers opposite said bottom wall; and an electric cable retaining device (1; 200) as defined according to at least one of claims 1 to 20.

## Patentansprüche

1. Elektrokabelhaltevorrichtung (1; 200) für einen Verkabelungskanal (100; 100'), welcher eine erste (2) und eine zweite (2') Seitenwand aufweist, welche mit einer Bodenwand (3) verbunden sind, wobei sowohl die erste als auch die zweite Wand eine Mehrzahl flexibler Finger (4) umfasst, welche sich mit Schlitzen (5) abwechseln, umfassend:
• eine Kabelhalteleiste (21) innerhalb des Kanals, welche an einem ersten Ende (21 a) mit Kopplungsmitteln (25, 26; 25, 26, 220) bereitgestellt ist, um lösbar an wenigstens einem ersten Finger (4) der ersten Seitenwand (2) befestigt zu sein, und welche ein zweites Ende (21 b) aufweist, welches dazu bestimmt ist, in Richtung der zweiten Wand (2') hervorzustehen,
**dadurch gekennzeichnet, dass** die Kabelhaltevorrichtung zusätzliche Haltemittel (30) umfasst, welche lösbar mit dem hervorstehenden Ende der Leiste mechanisch gekoppelt sind und lösbar an wenigstens einem zweiten Finger (4) der zweiten Wand befestigt werden können, um das zweite Ende in der Betriebsstellung zu verriegeln, wobei die Mittel (30) in der Betriebsstellung auch direkt an dem hervorstehenden Ende der Kabelhalteleiste (21 b) befestigt sind.

2. Kabelhaltevorrichtung (1; 200) nach Anspruch 1, wobei die zusätzlichen Haltemittel (30) separat mit dem zweiten Ende (21 b) gekoppelt sind, welches von der Leiste (21) hervorsteht.

3. Kabelhaltevorrichtung (1; 200) nach Anspruch 1, wobei die zusätzlichen Haltemittel (30) und die Leiste (21) relativ zueinander gleiten.

4. Kabelhaltevorrichtung (1; 200) nach wenigstens einem der vorhergehenden Ansprüche, wobei die zusätzlichen Haltemittel (30) auf der Leiste (21) gleiten.

5. Kabelhaltevorrichtung (1; 200) nach Anspruch 4, wobei die zusätzlichen Haltemittel (30) einen Hauptkörper (31) umfassen, welcher in das zweite Ende (21 b) der Leiste (21) eingefügt werden kann, wobei der Körper mit weiteren Kopplungsmitteln (37, 38; 37, 38, 220) verbunden ist, welche an dem wenigstens einem Finger (4) zu befestigen sind.

6. Kabelhaltevorrichtung (1; 200) nach Anspruch 5, wobei der Hauptkörper (31) eine Basiswand (32) umfasst, welche mit gekrümmten Wänden (33) verbunden ist, um eine Durchgangsaufnahme (34) zu definieren, welche dazu geeignet ist, dem Hauptkörper (31) zu ermöglichen, auf der Leiste (21) zu gleiten.

7. Kabelhaltevorrichtung (1; 200) nach Anspruch 5, wobei der Hauptkörper (31) Anschlagmittel (40, 43) umfasst, welche dazu geeignet sind, mit wenigstens einer Durchgangsöffnung (210) in Eingriff gebracht zu werden, welche in der Leiste (21) bereitgestellt ist, um nur ein teilweises Gleiten des Hauptkörpers auf der Leiste zu ermöglichen.

8. Kabelhaltevorrichtung (1; 200) nach den Ansprüchen 6 und 7, wobei die Anschlagmittel durch eine Zunge (40) verkörpert sind, welche mit einem ersten Ende (41) lösbar an der Basiswand (32) des Hauptkörpers (31) befestigt ist, um zwischen einer offenen Stellung und einer geschlossenen Stellung um das erste Ende zu rotieren, wobei die Mittel ferner Zähne (43) umfassen, welche von einem zweiten Ende (42) der Zunge hervorstehen, um in der geschlossenen Stellung in die wenigstens eine Durchgangsöffnung (210) der Leiste (21) eingefügt zu werden.

9. Kabelhaltevorrichtung (1) nach Anspruch 5, wobei die mit dem Hauptkörper (31) verbundenen weiteren Kopplungsmittel erste flexible Haken (38) umfassen, um den Hauptkörper mit dem zweiten Finger (4) der zweiten Wand (2') des Kanals (100) mittels einer Schnappverbindung zu koppeln.

10. Kabelhaltevorrichtung (200) nach Anspruch 5, wobei die mit dem Hauptkörper (31) verbundenen weiteren Kopplungsmittel erste flexible Haken (38) umfassen, welche mit Rippen (220) zum Koppeln des Hauptkörpers mit dem zweiten Finger (4) mittels einer Schnappverbindung und mit einem weiteren zweiten Finger der zweiten Wand (2') des Kanals (100') gekoppelt sind, welcher dem zweiten Finger benachbart ist.

11. Kabelhaltevorrichtung (1; 200) nach Anspruch 5, wobei die weiteren Kopplungsmittel ferner Flächen (39) umfassen, welche dazu geeignet sind, mit Vorsprüngen (4a, 4b) des wenigstens einen zweiten Fingers (4) in Eingriff gebracht zu werden.

12. Kabelhaltevorrichtung (1; 200) nach Anspruch 11, wobei die Flächen durch zweite Haken (39) verkörpert sind, welche dazu geeignet sind, einen Anschlag und einen Gegenanschlag mit den Vorsprüngen (4a, 4b) bereitzustellen, um das Gleiten auf dem wenigstens einen zweiten Finger (4) des Hauptkörpers (31), welcher an dem Finger befestigt ist, zu stoppen.

13. Kabelhaltevorrichtung (1; 200) nach Anspruch 5, wobei die ersten (38) und zweiten (39) Haken von einer Kopplungswand (37) hervorstehen, welche mit dem Hauptkörper (31) verbunden ist, wobei die zweiten Haken parallel zu den ersten Haken ausgerichtet enden.

14. Kabelhaltevorrichtung (200) nach den Ansprüchen 10 und 13, wobei die Rippen (220) in der Zwischenposition zwischen den ersten Haken (38) endend von der Kopplungswand (37) hervorstehen.

15. Kabelhaltevorrichtung (1; 200) nach den Ansprüchen 1 und 11, wobei die Kopplungsmittel der Leiste (21) weitere zweite Haken (27) umfassen, welche dazu geeignet sind, einen Anschlag und einen Gegenanschlag mit den Vorsprüngen (4a, 4b) bereitzustellen, um das Gleiten der Leiste (21) auf dem wenigstens einen ersten Finger (4) zu stoppen.

16. Kabelhaltevorrichtung (1; 200) nach Anspruch 1, wobei die Kopplungsmittel der Leiste (21) wenigstens einen Eingriffsflügel (26) umfassen, um in der Betriebsstellung an wenigstens einem dem wenigstens einen ersten Finger des Kanals (100; 100') benachbarten Finger (4) anzuliegen.

17. Kabelhaltevorrichtung (1) nach Anspruch 1, wobei die Kopplungsmittel der Leiste (21) weitere erste flexible Haken (25) umfassen, um mittels einer Schnappverbindung mit dem ersten Finger (4) der ersten Wand (2) des Kanals (100) in Eingriff zu treten.

18. Kabelhaltevorrichtung (200) nach Anspruch 1, wobei die Kopplungsmittel der Leiste (21) weitere erste flexible Haken (25) umfassen, welche mit Rippen (220) zum Koppeln mit dem ersten Finger (4) mittels einer Schnappverbindung und mit einem dem ersten Finger benachbarten weiteren ersten Finger der ersten Wand (2) des Kanals (100) gekoppelt sind.

19. Kabelhaltevorrichtung (1; 200) nach wenigstens einem der vorhergehenden Ansprüche, wobei die Leiste (21) eine Mehrzahl von Trennstellen (24) umfasst, um die Abtrennung wenigstens eines Abschnitts (21') der Leiste (21) durch Einstellen der Leiste (21) auf Kanäle (100; 100') verschiedener Breiten (d) zu ermöglichen.

20. Kabelhaltevorrichtung (1; 200) nach wenigstens einem der vorhergehenden Ansprüche, wobei die Vorrichtung aus Polyamid hergestellt ist.

21. Verkabelungssystem für Elektrokabel, umfassend:
• einen Verkabelungskanal (100; 100'), umfassend:
• eine Bodenwand (3);
• eine erste (2) und eine zweite (2') Seitenwand, welche mit der Bodenwand verbunden sind, wobei jede Seitenwand eine Mehrzahl flexibler Finger (4) umfasst, welche sich mit Schlitzen (5) abwechseln;
• Profile zum Haltern einer Abdeckung des Verkabelungskanals (100; 100'), welche gegenüberliegend der Bodenwand an freien Enden der flexiblen Finger angeordnet sind; und eine wie in wenigstens einem der Ansprüche 1 bis 20 definierte Elektrokabelhaltevorrichtung (1; 200).

## Revendications

1. Dispositif de retenue de câble électrique (1 ; 200) pour goulotte guide-câbles (100 ; 100') ayant des première (2) et deuxième (2') parois latérales unies à une paroi de fond (3), chacune desdites première et deuxième parois comprenant une pluralité de doigts flexibles (4) s'alternant avec des fentes (5), comprenant :
- une bande de retenue de câble (21) à l'intérieur de la goulotte, munie à une première extrémité (21a) de moyens de couplage (25, 26 ; 25, 26, 220) de manière à être fixée de manière amovible à au moins un premier doigt (4) de ladite première paroi latérale (2) et ayant une deuxième extrémité (21b) destinée à faire saillie vers ladite deuxième paroi (2'),
**caractérisé en ce que** ledit dispositif de retenue de câble comprend des moyens de retenue secondaires (30) qui sont couplés mécaniquement de manière amovible à ladite extrémité saillante de la bande et qui peuvent être fixés de manière amovible à au moins un deuxième doigt (4) de la deuxième paroi pour bloquer ladite deuxième extrémité dans la position de fonctionnement, lesdits moyens (30) étant également directement fixés dans ladite position de fonctionnement à ladite extrémité saillante de la bande de retenue de câble (21b).

2. Dispositif de retenue de câble (1 ; 200) selon la revendication 1, dans lequel lesdits moyens de retenue secondaires (30) sont couplés séparément à ladite deuxième extrémité (21b) faisant saillie depuis la bande (21).

3. Dispositif de retenue de câble (1 ; 200) selon la revendication 1, dans lequel lesdits moyens de retenue secondaires (30) et ladite bande (21) coulissent l'un par rapport à l'autre.

4. Dispositif de retenue de câble (1 ; 200) selon au moins l'une des revendications précédentes, dans lequel lesdits moyens de retenue secondaires (30) coulissent sur ladite bande (21).

5. Dispositif de retenue de câble (1 ; 200) selon la revendication 4, dans lequel lesdits moyens de retenue secondaires (30) comprennent un corps principal (31) qui peut être inséré dans la deuxième extrémité (21b) de la bande (21), ledit corps étant connecté à d'autres moyens de couplage (37, 38 ; 37, 38, 220) destinés à être fixés à un deuxième doigt (4), au moins au nombre de un.

6. Dispositif de retenue de câble (1 ; 200) selon la revendication 5, dans lequel ledit corps principal (31) comprend une paroi de base (32) unie à des parois incurvées (33) de manière à définir un siège traversant (34) adapté pour permettre au corps principal (31) de coulisser sur la bande (21).

7. Dispositif de retenue de câble (1 ; 200) selon la revendication 5, dans lequel ledit corps principal (31) comprend des moyens d'arrêt (40, 43) adaptés pour être engagés avec au moins une ouverture passante (210) ménagée dans la bande (21) de manière à permettre un coulissement seulement partiel du corps principal sur ladite bande.

8. Dispositif de retenue de câble (1 ; 200) selon les revendications 6 et 7, dans lequel lesdits moyens d'arrêt sont réalisés par une languette (40) qui est attachée de manière amovible à la paroi de base (32) du corps principal (31), avec une première extrémité (41), qui pivote autour de ladite première extrémité entre une position ouverte et une position fermée, lesdits moyens comprenant en outre des dents (43) faisant saillie depuis une deuxième extrémité (42) de la languette pour être insérées dans l'ouverture passante (210), au moins au nombre de une, de la bande (21) dans ladite position fermée.

9. Dispositif de retenue de câble (1) selon la revendication 5, dans lequel les autres moyens de couplage connectés au corps principal (31) comprennent des premiers crochets flexibles (38) destinés à accoupler par encliquetage le corps principal audit deuxième doigt (4) de la deuxième paroi (2') de la goulotte (100).

10. Dispositif de retenue de câble (200) selon la revendication 5, dans lequel les autres moyens de couplage connectés au corps principal (31) comprennent des premiers crochets flexibles (38) couplés à des nervures (220) pour accoupler par encliquetage le corps principal audit deuxième doigt (4) et à un autre deuxième doigt de la deuxième paroi (2') de ladite goulotte (100') adjacente audit deuxième doigt.

11. Dispositif de retenue de câble (1 ; 200) selon la revendication 5, dans lequel les autres moyens de couplage comprennent en outre des surfaces (39) adaptées pour être engagées avec des saillies (4a, 4b) du deuxième doigt (4), au moins au nombre de un.

12. Dispositif de retenue de câble (1 ; 200) selon la revendication 11, dans lequel lesdites surfaces sont réalisées dans des deuxièmes crochets (39) adaptés pour fournir une butée et une contrebutée avec lesdites saillies (4a, 4b) pour arrêter le coulissement sur le deuxième doigt (4), au moins au nombre de un, du corps principal (31) qui est fixé audit doigt.

13. Dispositif de retenue de câble (1 ; 200) selon la revendication 5, dans lequel lesdits premier (38) et deuxième (39) crochets font saillie depuis une paroi de couplage (37) qui est connectée au corps principal (31), lesdits deuxièmes crochets se trouvant alors alignés parallèlement aux premiers crochets.

14. Dispositif de retenue de câble (200) selon les revendications 10 et 13, dans lequel les nervures (220) font saillie depuis la paroi de couplage (37) pour donner la position intermédiaire entre lesdits premiers crochets (38).

15. Dispositif de retenue de câble (1 ; 200) selon les revendications 1 et 11, dans lequel lesdits moyens de couplage de la bande (21) comprennent d'autres deuxièmes crochets (27) adaptés pour fournir une butée et une contrebutée avec lesdites saillies (4a, 4b) pour arrêter le coulissement de la bande (21) le premier doigt (4), au moins au nombre de un.

16. Dispositif de retenue de câble (1 ; 200) selon la revendication 1, dans lequel lesdits moyens de couplage de la bande (21) comprennent au moins une aile d'engagement (26) destinée à venir en butée, dans la position de fonctionnement, contre au moins un doigt (4) adjacent audit premier doigt de la goulotte (100 ; 100'), au moins au nombre de une.

17. Dispositif de retenue de câble (1) selon la revendication 1, dans lequel les moyens de couplage de la bande (21) comprennent d'autres premiers crochets flexibles (25) destinés à un accouplement par encliquetage avec ledit premier doigt (4) de la première paroi (2) de la goulotte (100).

18. Dispositif de retenue de câble (200) selon la revendication 1, dans lequel les moyens de couplage de la bande (21) comprennent d'autres premiers crochets flexibles (25) couplés à des nervures (220) pour un accouplement par encliquetage avec ledit premier doigt (4) et avec un autre premier doigt de la première paroi (2) de la goulotte (100) adjacente audit premier doigt.

19. Dispositif de retenue de câble (1 ; 200) selon au moins l'une des revendications précédentes, dans lequel la bande (21) comprend une pluralité de points de sectionnement (24) pour permettre le détachement d'au moins une portion (21') de bande en ajustant la bande (21) à des goulottes (100 ; 100') de différentes largeurs (d).

20. Dispositif de retenue de câble (1 ; 200) selon au moins l'une des revendications précédentes, dans lequel ledit dispositif est réalisé en polyamide.

21. Système de câblage pour câbles électriques comprenant :
- une goulotte guide-câbles (100 ; 100') comprenant :
- une paroi de fond (3) ;
- des première (2) et deuxième (2') parois latérales unies à la paroi de fond, chaque paroi latérale comprenant une pluralité de doigts flexibles (4) en alternance avec des fentes (5) ;
- des profilés pour maintenir un couvercle de la goulotte guide-câbles (100 ; 100') agencés à des extrémités libres des doigts flexibles à l'opposé de ladite paroi de fond ; et un dispositif de retenue de câble électrique (1 ; 200) tel que défini selon au moins l'une des revendications 1 à 20.
